(19) Europäisches Patentamt / European Patent Office / Office européen des brevets

(11) **EP 3 200 068 B1**

(12) **EUROPEAN PATENT SPECIFICATION**

(45) Date of publication and mention of the grant of the patent:
**26.04.2023 Bulletin 2023/17**

(21) Application number: **16827042.9**

(22) Date of filing: **08.03.2016**

(51) International Patent Classification (IPC):
**G06F 9/38** *(2018.01)*    **G06F 9/50** *(2006.01)*
**G06F 9/30** *(2018.01)*    **G06F 7/53** *(2006.01)*

(52) Cooperative Patent Classification (CPC):
**G06F 9/5066; G06F 7/5324**

(86) International application number:
**PCT/CN2016/075847**

(87) International publication number:
**WO 2017/012351 (26.01.2017 Gazette 2017/04)**

(54) **PARALLEL COMPUTING METHOD AND TERMINAL**

PARALLELBERECHNUNGSVERFAHREN UND ENDGERÄT

PROCÉDÉ DE CALCUL PARALLÈLE ET TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2015 CN 201510435516**

(43) Date of publication of application:
**02.08.2017 Bulletin 2017/31**

(73) Proprietor: **Huawei Technologies Co., Ltd.**
**Longgang District**
**Shenzhen, Guangdong 518129 (CN)**

(72) Inventors:
  • **CHENG, Xiangguo**
   **Qingdao**
   **Shandong 266071 (CN)**
  • **XIAN, Hequn**
   **Qingdao**
   **Shandong 266071 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A2- 1 614 027    CN-A- 101 271 570
CN-A- 104 731 563    US-A1- 2010 153 830
US-A1- 2014 244 703

  • Guy E Blelloch ET AL: "Divide-and-Conquer and Recurrences", Parallel and Sequential Data Structures and Algorithms, 19 January 2012 (2012-01-19), pages 1-9, XP055430381, DOI: 10.1109/TNET.2014.2369346 Retrieved from the Internet: URL:http://www.cs.cmu.edu/afs/cs/academic/class/15210-s12/www/lectures/lecture02.pdf [retrieved on 2017-11-29]
  • WOLFGANG KUECHLIN ET AL: "Integer multiplication in PARSAC-2 on stock microprocessors", 7 October 1991 (1991-10-07), APPLIED ALGEBRA, ALGEBRAIC ALGORITHMS AND ERROR-CORRECTING CODES. 9TH INTERNATIONAL SYMPOSIUM, AAECC-9. PROCEEDINGS - 7-11 OCT. 1991 - NEW ORLEANS, LA, USA, SPRINGER, BERLIN, HEIDELBERG, PAGE(S) 206 - 217, XP019180442, ISBN: 978-3-540-54522-4 * abstract * * Section 2 *
  • Marcelo E. Kaihara: "An Implementation of RSA 2048 on GPUs Using CUDA", RAIM'11, 8 February 2011 (2011-02-08), pages 1-41, XP055430668, Perpignan Retrieved from the Internet: URL:http://www.marcelokaihara.com/papers/An_Implementation_of_RSA2048_on_GPUs_using_ CUDA.pdf [retrieved on 2017-11-30]

- Farnam Mansouri: "On The Parallelization Of Integer Polynomial Multiplication", MSc Thesis, 1 January 2014 (2014-01-01), pages 1-123, XP055430250, Ontario, Canada Retrieved from the Internet: URL:http://ir.lib.uwo.ca/cgi/viewcontent.cgi?article=3519&context=etd [retrieved on 2017-11-29]
- MEENDERINCK C H ET AL: "Parallel Scalability of Video Decoders", INTERNET CITATION, 1 April 2008 (2008-04-01), pages 1-53, XP002550401, Retrieved from the Internet: URL:http://ce.et.tudelft.nl/publicationfiles/1516_68_h264_parallelsim_report.pdf [retrieved on 2009-10-14]

## Description

## TECHNICAL FIELD

The present invention relates to the field of data processing technologies, and in particular, to a parallel computing method and terminal.

## BACKGROUND

Currently, large integer addition, multiplication, and modulo operations are not only the basis of addition, subtraction, multiplication, and modulo operations on elements in a finite field but also the basis of an elliptic curve cryptography operation. One operation on an elliptic curve may need to invoke up to dozens of large integer operations. Therefore, enhancing an execution speed of a large integer operation is of great significance for enhancing execution efficiency of elliptic curve cryptography. A large integer operation can also be applied to many numerical computations. For an application based on a large integer operation, it is also extremely essential to find a quick and effective large integer computing method. A large integer refers to an integer of which a numerical value exceeds a range represented by a common integer-type variable in the program design language, and of which a quantity of digits is generally hundreds or thousands of digits.

Among large integer operations, addition and subtraction are relatively simple, multiplication is most difficult, and a modulo operation can be implemented by being converted into multiplication. Most of current large integer multiplication computing methods are based on a serial algorithm. A computing resource of a CPU (Central Processing Unit, central processing unit) is used to implement these methods in an Android operating system platform. The existing large integer multiplication parallel computing technology mainly utilizes a CUDA (Compute Unified Device Architecture, compute unified device architecture) framework, which is an operation platform and enables a GPU (Graphics Processing Unit, graphics processing unit) in a device to resolve a complicated computing problem.

However, because the Android operating system does not support the CUDA framework, the Android operating system is unable to perform parallel computing for large integer multiplication. Consequently, large integer multiplication computing is relatively slow.

Guy E Blelloch ET AT: "Divide-and-Conquer and Recurrences", Parallel and Sequential Data Structures and Alogrithms, 19 January 2012 (2012-01-19) discloses discloses information about divide-and-conquer technique in general and provides example of multiply n-bit numbers using divide-and-conquer. In this example, the n-bit numbers are first divided into a most significant half and a least-significant half. EP 1 614 027 A2 discloses a method of operating a multiplication circuit to perform multiply-accumulate operations on multi-word operands. An operations sequencer is programmed to direct the transfer of operand segments between RAM and internal data registers in a specified sequence. The se-quence processes groups of two adjacent result word-weights (columns), with the multiply cycles within a group proceeding in a zigzag fashion by alternating columns with steadily increasing or decreasing operand segment weights.

## SUMMARY

The present invention provides a parallel computing method of claim 1 and a terminal of claim 6, so as to resolve a current problem of a relatively slow execution speed of a large integer multiplication operation in an operating system, for example in the Android operating system. Possible implementation manners are disclosed in the dependent claims. The present invention brings the following beneficial effects:

In the technical solutions according to the embodiments of the present invention, a terminal can divide an entered first character string and second character string, and invoke multiple processors by using an execution engine, so that a parallel operation can be implemented during operation. Therefore, a computing speed of a large integer multiplication operation is improved; furthermore, because the execution engine can run in the Android operating system, a current problem of a relatively slow execution speed of a large integer multiplication operation in the Android operating system is resolved.

## BRIEF DESCRIPTION OF DRAWINGS

FIG 1 is a schematic flowchart of a parallel computing method according to an embodiment of the present invention;

FIG 2a is a schematic diagram of a character string entry interface displayed by a terminal in a parallel computing method according to an embodiment of the present invention;

FIG 2b is a schematic diagram of a character string entry interface displayed by a terminal in a parallel computing method according to an embodiment of the present invention;

FIG 3 is a schematic diagram of element storage in a parallel computing method according to an embodiment of the present invention;

FIG 4 is a schematic diagram of element storage in a parallel computing method according to an embodiment of the present invention;

FIG 5 is a schematic diagram of operation result storage in a parallel computing method according to an embodiment of the present invention;

FIG 6 is a schematic flowchart of a parallel computing method according to an embodiment of the present invention;

FIG 7 is a schematic diagram of a parallel computing terminal according to an embodiment of the present invention; and

FIG 8 is a schematic structural diagram of hardware of a parallel computing terminal according to an embodiment of the present invention.

## DESCRIPTION OF EMBODIMENTS

A terminal according to an embodiment of the present invention divides a first character string into M first elements, where lengths of the first elements are not greater than Z; divides a second character string into N second elements, where lengths of the second elements are not greater than Z, Z is determined by the terminal according to a size of a memory unit of an execution engine, M is a positive integer, and N is a positive integer; invokes multiple processors to perform a multiplication operation on the first elements and the second elements to obtain an N x M matrix, where the terminal invokes the multiple processors by using the execution engine, and each processor performs a different multiplication operation; performs, by invoking the multiple processors, an addition operation on elements on a preset diagonal of the N x M matrix to obtain a first temporary result array; and outputs an operation result according to the first temporary result array. In this technical solution, a terminal can divide an entered first character string and second character string, and invoke multiple processors by using an execution engine, so that a parallel operation can be implemented during operation. Therefore, a computing speed of a large integer multiplication operation is improved; furthermore, because the execution engine can run in the Android operating system, a current problem of a relatively slow execution speed of a large integer multiplication operation in the Android operating system is resolved.

The following further describes the embodiments of the present invention in detail with reference to the accompanying drawings of the specification.

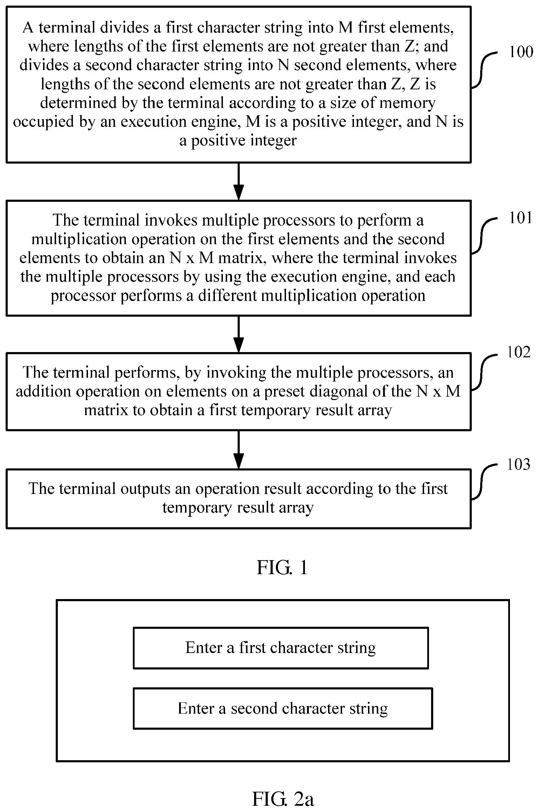

As shown in FIG 1, a parallel computing method according to an embodiment of the present invention includes:

Step 100: A terminal divides a first character string into M first elements, where lengths of the first elements are not greater than Z; and divides a second character string into N second elements, where lengths of the second elements are not greater than Z, Z is determined by the terminal according to a size of a memory unit of an execution engine, M is a positive integer, and N is a positive integer.

Step 101: The terminal invokes multiple processors to perform a multiplication operation on the first elements and the second elements to obtain an N x M matrix, where the terminal invokes the multiple processors by using the execution engine, and each processor performs a different multiplication operation.

Step 102: The terminal performs, by invoking the multiple processors, an addition operation on elements on a preset diagonal of the N x M matrix to obtain a first temporary result array.

Step 103: The terminal outputs an operation result according to the first temporary result array.

The terminal according to this embodiment of the present invention may be a mobile phone, a tablet, or the like that supports the Android operating system.

The execution engine in this embodiment of the present invention is an execution engine that can run in the Android operating system and can invoke multiple processors to process an operation task. Optionally, the execution engine is a RenderScript execution engine.

The following gives specific description by using the RenderScript execution engine as an example. For another execution engine that can implement the technical solution according to this embodiment of the present invention, an implementation procedure is the same as an implementation procedure of the RenderScript execution engine, which is not repeated herein.

An execution procedure of this embodiment of the present invention is designed based on a software framework of the RenderScript execution engine. Specifically, the software framework of the RenderScript execution engine includes: a series of modules that implement an operation, such as the RenderScript execution engine, a processor, and a memory that are configured to implement computing; and a relationship and an interaction mechanism between these modules. For example, the RenderScript execution engine invokes data in the memory by using an application programming interface, where the application programming interface is implemented by an object, and attribute information of the object is specified in the framework. In addition, the framework further includes an adjustment mechanism of the framework. Desirable software may be designed and obtained by making a proper adjustment according to an actual need.

Specifically, before step 100, the terminal determines whether both the first character string and the second character string are numbers. If both the first character string and the second character string are numbers, step 100 is performed; or otherwise, an input error and a re-enter prompt are displayed.

It should be noted that, the first character string and the second character string are entered according to a user need. For example, if a user needs to compute a result of "1234567" times "7654321", the user enters a first character string "1234567" and a second character string "7654321" on an entry interface displayed by the terminal. If "123456a" is entered as the first character string, the terminal displays an input error and a re-enter prompt.

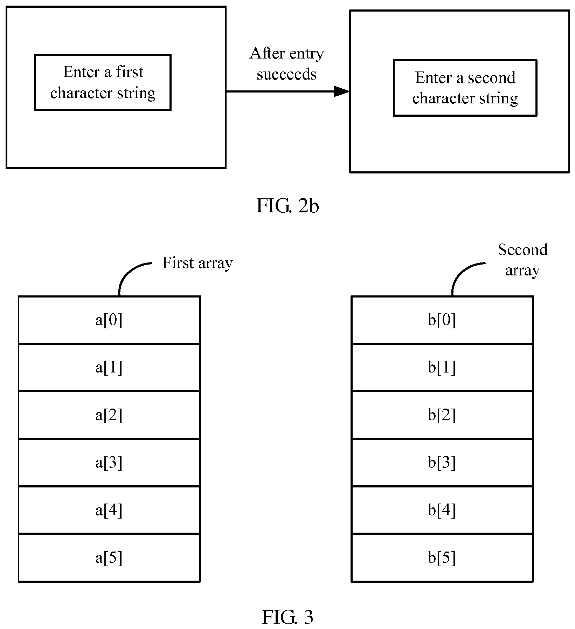

In addition, as shown in FIG 2a, the user can simultaneously enter the first character string and the second character string on the entry interface displayed by the terminal, and as shown in FIG 2b, the user can also enter the second character string after entering the first character string on the entry interface displayed by the terminal. In addition, this embodiment of the present invention is not limited to the foregoing two character string entering manners, and any manner in which a character string can be entered into the terminal is applicable.

After the M first elements and the N second elements are obtained, the first elements and the second elements are stored, where a format of storing the M first elements and the N second elements meets a decimal notation format or another number system, such as the binary notation, so that a data type is converted from a character string into numerical data.

Alternatively, after the M first elements are obtained, the first elements are stored in a decimal notation format, and after the N second elements are obtained, the second elements are stored in the decimal notation format.

The first elements and the second elements meet a same type of data. For example, if the first elements are stored as data in a binary notation format, the second elements are also stored as data in the binary notation format and cannot be stored as data of another type.

It should be noted that, the first elements and the second elements may be separately stored in preset arrays or other space such as a database that can be used to store data.

Storing the first elements in an array is used as an example. After a first character string "874235698456" is divided, first elements "8456", "3569", and "8742" are stored into a first array a in the decimal notation format, where a[0]=8456, a[1]=3569, and a[2]=8742. A manner of storing a second character string is the same as a manner of storing the first character string, which is not repeated herein.

When invoking the first elements and the second elements, the processors need to store the first elements and the second elements, which are stored in arrays or other storage space, into memory space occupied by the RenderScript execution engine, so as to implement an operation on the first elements and the second elements. To avoid an overflow when the M first elements and the N second elements are stored in the memory space occupied by the RenderScript execution engine, a maximum length of the divided first elements and second elements is determined according to the following formula:

$$Z = floor((L \log 2)/2)$$

where Z is a maximum length of an element obtained by dividing an entered character string, L is the size of the memory unit of the execution engine; when the execution engine is the RenderScript execution engine, L is a size of the memory unit of the Render-Script execution engine; and

floor(Z) represents a maximum integer that is not greater than Z; M and N may be equal or not equal.

Specifically, if the size of memory units of the RenderScript execution engine is 32 bits, the maximum length of an element obtained by dividing an entered character string is 4. For example, when an entered first character string is "874235698456", the first character string may be divided into a first element "8456", a first element "3569", and a first element "8742" from right to left; the first character string may also be divided into a first element "8456", a first element "69", a first element "4235", and a first element "87" from right to left, as long as a length of a divided element is not greater than 4 bits. The first element "8456" is used as an example to specifically describe a length of an element; the first element "8456" includes 4 digits, and therefore a length of the first element is 4.

To avoid a waste of memory space, optionally, an entered character string is divided into K elements in a sequence from right to left, where lengths of (K-1) elements are Z, a length of the $K^{th}$ element is not greater than Z, and K is a positive integer greater than 1. For example, if a first character string is "874235698456", the first character string is divided into a first element "8456", a first element "3569", and a first element "8742" from right to left; if a first character string is "45987456213", the first character string is divided into a first element "6213", a first element "8745", and a first element "459" from right to left.

In step 101, before invoking the processors by using the RenderScript execution engine, the terminal starts the RenderScript execution engine. Specifically, the terminal starts the RenderScript execution engine by using a specified application programming interface.

It should be noted that, the application programming interface is an object of a class that is set according to a syntax format specified in the RenderScript.

After starting the RenderScript execution engine, the terminal determines, according to a load value of a processor, the multiple processors that are configured to perform the multiplication operation, where the processor may be a CPU, a GPU, a DSP (digital signal processor), or the like.

The terminal invokes, by using the RenderScript execution engine, the determined multiple processors to perform the multiplication operation on the first elements and the second elements.

A CPU is used as an example to give specific description: if a load value of the CPU is relatively large and exceeds a preset load value, the terminal allocates no multiplication operation to the CPU; if the current load value of the CPU does not exceed the preset load value, the terminal allocates a multiplication operation to the CPU according to the current load value and the preset load value, where the preset load value may be set according to the CPU, and the preset load value may also be set to a maximum load value of the CPU. For example, if the maximum load value of the CPU is 10 and the current load value of the CPU is 3, a computation payload with a load value of 7 is allocated to the CPU by using the RenderScript execution engine.

Before using the processors to perform the multiplication operation on the first elements and the second elements, the terminal uses the RenderScript execution engine to access the first elements and the second elements.

Specifically, a process in which the terminal uses the RenderScript execution engine to access the first elements and the second elements is: the terminal separately stores the first elements and the second elements that are stored in arrays or other storage space into the memory occupied by the RenderScript execution engine. The example shown in FIG 3 in which a first array stores first elements and a second array stores second elements is used; the first elements $a[0]$, $a[1]$, $a[2]$, $a[3]$, $a[4]$, and $a[5]$ are stored, by using a memory interface (such as a preset object of a memory interface class) and according to offsets, into memory occupied by a RenderScript execution engine; and the elements $b[0]$, $b[1]$, $b[2]$, $b[3]$, $b[4]$, and $b[5]$ in the second array are stored, by using the memory interface (such as a preset object of a memory interface class) and according to offsets, into the memory occupied by the RenderScript execution engine.

In addition, in the example shown in FIG 3, multiplication operations include: $a[0] \times b[0]$, $a[0] \times b[1]$, $a[0] \times b[2]$, $a[0] \times b[3]$, $a[0] \times b[4]$, $a[0] \times b[5]$, $a[1] \times b[1]$, $a[1] \times b[2]$, $a[1] \times b[3]$, $a[1] \times b[4]$, $a[1] \times b[5]$, $a[2] \times b[2]$, $a[2] \times b[3]$, $a[2] \times b[4]$, $a[2] \times b[5]$, $a[3] \times b[3]$, $a[3] \times b[4]$, $a[3] \times b[5]$, and $a[4] \times b[5]$.

The foregoing multiplication operations are separately allocated to multiple processors to perform operations. For example, $a[0] \times b[0]$, $a[0] \times b[1]$, $a[0] \times b[2]$, $a[0] \times b[3]$, $a[0] \times b[4]$, $a[0] \times b[5]$, and $a[1] \times b[1]$ are allocated to a CPU to perform operations, and $a[1] \times b[2]$, $a[1] \times b[3]$, $a[1] \times b[4]$, $a[1] \times b[5]$, $a[2] \times b[2]$, $a[2] \times b[3]$, $a[2] \times b[4]$, $a[2] \times b[5]$, $a[3] \times b[3]$, $a[3] \times b[4]$, $a[3] \times b[5]$, and $a[4] \times b[5]$ are allocated to a GPU to perform operations. Therefore, a parallel operation is implemented and an operation speed is improved.

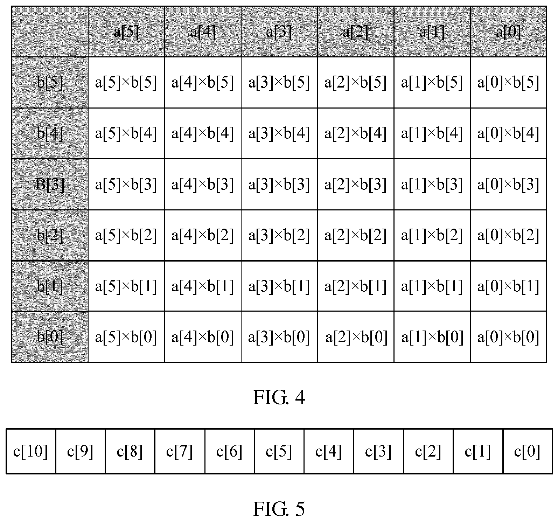

Results obtained by performing operations are separately stored in the memory occupied by the RenderScript execution engine, so as to obtain a matrix shown in FIG 4. Elements on a preset diagonal are added in a sequence from right to left to obtain a first temporary array, and the obtained first temporary array is stored in an array c in the memory space. The first temporary array includes multiple first temporary results: $c[0]$, $c[1]$, $c[2]$, $c[3]$, $c[4]$, $c[5]$, $c[6]$, $c[7]$, $c[8]$, $c[9]$, and $c[10]$, where $c[0] = a[0] \times b[0]$; $c[1] = a[0] \times b[1] + a[1] \times b[0]$; $c[2] = a[0] \times b[2] + a[1] \times b[1] + a[2] \times b[0]$; $c[3] = a[0] \times b[3] + a[1] \times b[2] + a[2] \times b[1] + a[3] \times b[0]$; $c[4] = a[0] \times b[4] + a[1] \times b[3] + a[2] \times b[2] + a[3] \times b[1] + a[4] \times b[0]$; $c[5] = a[0] \times$

$b[5] + a[1] \times b[4] + a[2] \times b[3] + a[3] \times b[2] + a[4] \times b[1] + a[5] \times b[0]$; $c[6] = a[1] \times b[5] + a[2] \times b[4] + a[3] \times b[3] + a[4] \times b[2] + a[5] \times b[1]$; $c[7] = a[2] \times b[5] + a[3] \times b[4] + a[4] \times b[3] + a[5] \times b[2]$; $c[8] = a[3] \times b[5] + a[4] \times b[4] + a[5] \times b[3]$; $c[9] = a[4] \times b[5] + a[5] \times b[4]$; $c[10] = a[5] \times b[5]$.

Computing $c[4]$ is used as an example. An implementation manner may be: $a[0] \times b[4] + a[1] \times b[3]$ is computed by a CPU1 to obtain $L[1]$; $a[2] \times b[2] + a[3] \times b[1]$ is computed by a GPU to obtain $L[2]$; $L[1] + L[2]$ is computed by a DSP to obtain $L[3]$; and $L[3] + a[4] \times b[0]$ is computed by a CPU2 to obtain $c[4]$. When another first temporary result in the first temporary result array is obtained by performing an addition operation, a computing manner is similar to the foregoing process, which is not repeated herein. Because the terminal can obtain the first temporary result array by means of parallel computing, a computing speed of a large integer multiplication operation is further improved.

It should be noted that, the preset diagonal is a diagonal that is set according to a computing manner specified by the execution engine.

After the first temporary result array c is obtained, the terminal outputs the operation result according to the first temporary result array. Specifically, an optional implementation manner is:

The terminal converts the first temporary result array into a second temporary result array, where the second temporary result array includes multiple second temporary results, and lengths of the second temporary results are not greater than Z.

Specifically, the terminal determines whether a length of a first temporary result in the first temporary result array is greater than Z.

If the length of the first temporary result is not greater than Z, the terminal sets the first temporary result to a second temporary result.

If the length of the first temporary result is greater than Z, the terminal sets a first section of the first temporary result to a second temporary result, and divides a second section of the first temporary result by $10^Z$ to obtain a carry result.

The terminal determines a corresponding first temporary result after an offset of the first temporary result in the first temporary array is increased by 1; adds the carry result and the determined first temporary result; and re-determines whether a length of a first temporary result is greater than Z, where

the first section is a section whose length is Z in the first temporary result, and the second section is a section whose length is greater than Z in the first temporary result.

As shown in FIG 5, for example, when first temporary results are stored in an array c, where $c[0]=234$, $c[1]=4521$, $c[2]=7895$, $c[3]=4172$, $c[4]=3569$, $c[5]=5201$, $c[6]=45985$, $c[7]=8103$, $c[8]=3526$, $c[9]=2510$, $c[10]=423$, and $Z=4$, because an offset of $c[0]$ is 0, whether a length of $c[0]$ is greater than 4 is firstly determined; because the length of $c[0]$ is 3, the first temporary result is directly set to a second temporary result and stored in c[0]. Then, c[1], c[2], c[3], c[4], c[5], c[6], ..., and c[10] are determined in sequence. Because a length of c[6]=45985 is 5 and is greater than 4, 45985 is divided into a first section 5985 and a second section 40000; the first section 5985 replaces 45985 to be stored in c[6], and the second section 40000 is divided by 10000 to obtain a carry result 4. In this case, because an offset is 6, a corresponding first temporary result is c[7] after the offset is increased by 1; 8107 is obtained by adding 4 to c[7]; whether a length of 8107 is greater than 4 is determined; because the length of 8107 is 4, 8107 is set to a second temporary result and stored in storage space of c[7]. A procedure of converting another first temporary result into a second temporary result is similar to the foregoing process, which is not repeated herein.

In particular to a first temporary result corresponding to a greatest offset in the first temporary result array, for example, when a length of c[10]=12596 is 5 and is greater than 4, 12596 is divided into a first section 2596 and a second section 10000; 2596 is set to a second temporary result and replaces 12596 to be stored in storage space of c[10]; and 10000 is divided by 10000 to obtain an array result 1, and the array result 1 is stored in storage space of c[11].

After the second temporary results are obtained, for any second temporary result, the terminal determines whether a length of the second temporary result is equal to Z.

If the length of the second temporary result is less than Z, the terminal adds a 0 to the left side of the second temporary result, so as to obtain an operation result by converting the second temporary result into a character string format after the length of the second temporary result reaches Z.

If the length of the second temporary result is equal to Z, the terminal converts the second temporary result into a character string format to obtain an operation result.

The terminal outputs the operation result in a sequence of offsets of the second temporary results in the second array.

FIG 5 is used as an example, where c[1]=2354, c[2]=6251, c[3]=7892, c[4]=4562, c[5]=5230, c[6]=1234, c[7]=7894, c[8]=5698, c[9]=5621, c[10]=456, and Z=4. For c[1]=2354, c[1]=2354 is directly converted into a character string 2345 to obtain an operation result; for c[10]=456, c[10]=456 is converted into a character string 0456 to obtain an operation result. Then, the operation results are output in a sequence of offsets specified in an execution engine. For example, the operation results are output in an ascending sequence of offsets that is specified by a RenderScript execution engine. The foregoing data is used as an example, and a final result output by the terminal is 0456562156987894123452304562789262512354.

When a first array includes 100 elements and a second array also includes 100 elements, a quantity of serial operations required by using the foregoing computing method is 206, and compared with that by using a large integer multiplication operation method described in the patent No. CN101271570A, a quantity of serial operations is significantly reduced.

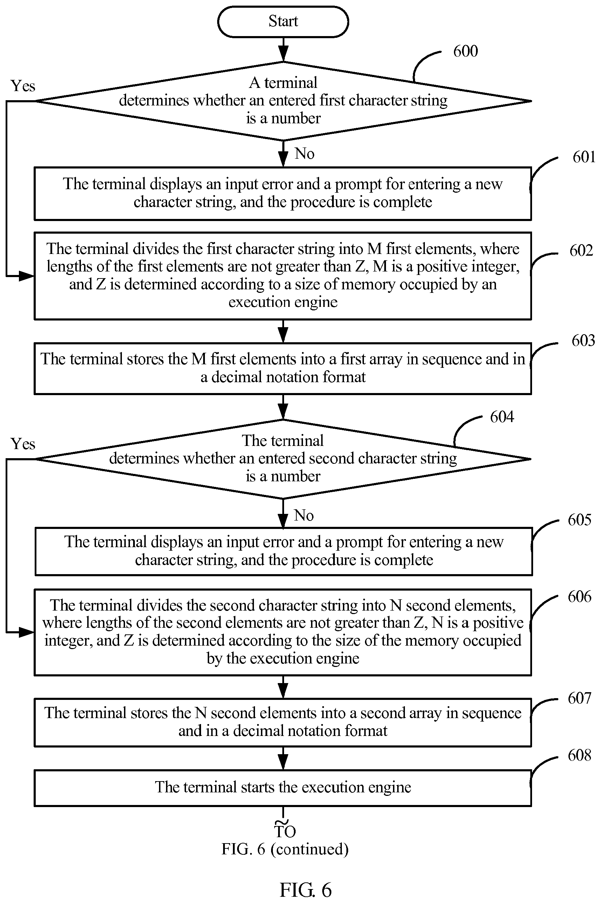

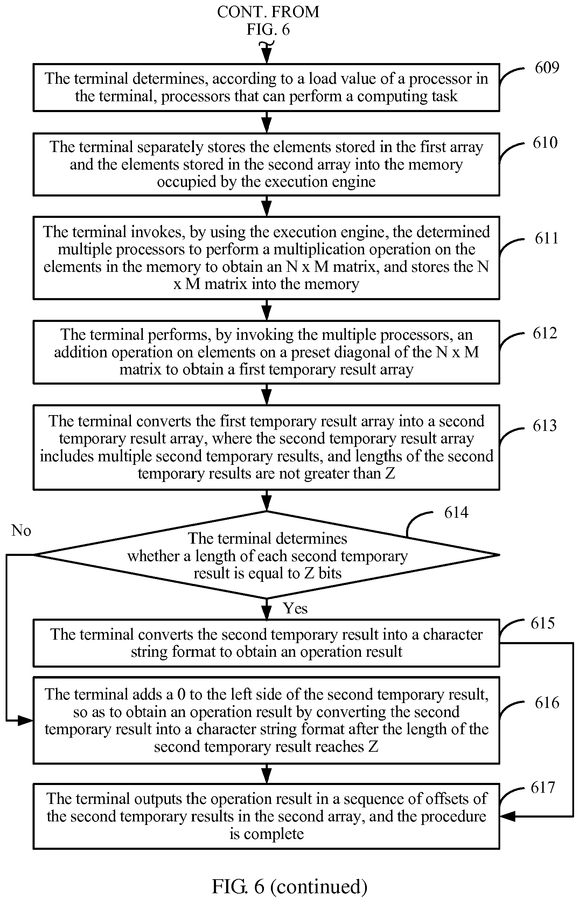

As shown in FIG 6, a parallel computing method according to an embodiment of the present invention includes:

Step 600: A terminal determines whether an entered first character string is a number. if the entered first character string is not a number, perform step 602; if the entered first character string is not a number, perform step 601.

Step 601: The terminal displays an input error and a prompt for entering a new character string, and the procedure is complete.

Step 602: The terminal divides the first character string into M first elements, where lengths of the first elements are not greater than Z, M is a positive integer, and Z is determined according to a size of a memory unit of an execution engine.

Step 603: The terminal stores the M first elements into a first array in sequence and in a decimal notation format.

Step 604: The terminal determines whether an entered second character string is a number. If the entered second character string is a number, perform step 606; if the entered second character string is not a number, perform step 605.

Step 605: The terminal displays an input error and a prompt for entering a new character string, and the procedure is complete.

Step 606: The terminal divides the second character string into N second elements, where lengths of the second elements are not greater than Z, N is a positive integer, and Z is determined according to the size of the memory unit of the execution engine.

Step 607: The terminal stores the N second elements into a second array in sequence and in a decimal notation format.

Step 608: The terminal starts the execution engine.

Step 609: The terminal determines, according to a load value of a processor in the terminal, processors that can perform a computing task.

Step 610: The terminal separately stores the elements stored in the first array and the elements stored in the second array into the memory occupied by the execution engine.

Step 611: The terminal invokes, by using the execution engine, the determined multiple processors to perform a multiplication operation on the elements in the memory to obtain an N x M matrix, and stores the N x M matrix into the memory.

Step 612: The terminal performs, by invoking the multiple processors, an addition operation on elements on a preset diagonal of the N x M matrix to obtain a first temporary result array.

Step 613: The terminal converts the first temporary result array into a second temporary result array, where the second temporary result array includes multiple second temporary results, and lengths of the second temporary results are not greater than Z.

Step 614: The terminal determines whether a length of each second temporary result is equal to Z. If yes, perform step 615; or otherwise, perform step 616.

Step 615: The terminal converts the second temporary result into a character string format. After an operation result is obtained, perform step 617.

Step 616: The terminal adds a 0 to the left side of the second temporary result, so as to obtain an operation result by converting the second temporary result into a character string format after the length of the second temporary result reaches Z.

Step 617: The terminal outputs the operation result in a sequence of offsets of the second temporary results in the second array, and the procedure is complete.

Based on a same invention conception, an embodiment of the present invention further provides a parallel computing terminal. Because a method corresponding to the parallel computing terminal according to this embodiment of the present invention is a parallel computing method, for implementation of the terminal according to this embodiment of the present invention, reference may be made to implementation of the method, and repetitive content is not repeated herein.

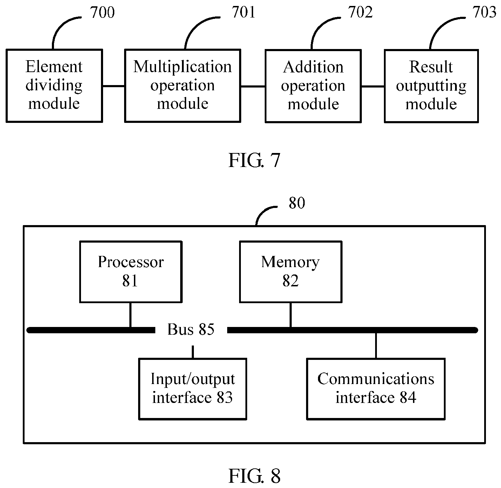

As shown in FIG 7, the parallel computing terminal according to this embodiment of the present invention includes:

an element dividing module 700, configured to divide a first character string into M first elements, where lengths of the first elements are not greater than Z; and divide a second character string into N second elements, where lengths of the second elements are not greater than Z, Z is determined according to a size of a memory unit of an execution engine, M is a positive integer, and N is a positive integer;
a multiplication operation module 701, configured to invoke multiple processors to perform a multiplication operation on the first elements and the second elements to obtain an N x M matrix, where the multiplication operation module invokes the multiple processors by using the execution engine, and each processor performs a different multiplication operation;
an addition operation module 702, configured to perform, by invoking the multiple processors, an addition operation on elements on a preset diagonal of the N x M matrix to obtain a first temporary result array; and
a result outputting module 703, configured to output an operation result according to the first temporary result array.

The result outputting module 703 is specifically configured to:
convert the first temporary result array into a second temporary result array, where the second temporary result array includes multiple second temporary results, and lengths of the second temporary results are not greater than Z; for any second temporary result, determine whether a length of the second temporary result is equal to Z; if the length of the second temporary result is less than Z, add a 0 to the left side of the second temporary result, so as to obtain an operation result by converting the second temporary result into a character string format after the length of the second temporary result reaches Z; or if the length of the second temporary result is equal to Z, convert the second temporary result into a character string format to obtain an operation result; and output the operation result in a sequence of offsets of the second temporary results in the second array.

Optionally, the first temporary result array includes multiple first temporary results, and the result outputting module 703 is specifically configured to:
determine whether a length of a first temporary result is greater than Z; if the length of the first temporary result is not greater than Z, set the first temporary result to a second temporary result; or if the length of the first temporary result is greater than Z, set a first section of the first temporary result to a second temporary result, and divide a second section of the first temporary result by $10^Z$ to obtain a carry result; and determine a corresponding first temporary result after an offset of the first temporary result in the first temporary array is increased by 1, add the carry result and the determined first temporary result, and re-determine whether a length of a first temporary result is greater than Z, where the first section is a section whose length is Z in the first temporary result, and the second section is a section whose length is greater than Z in the first temporary result.

Optionally, the multiplication operation module 701 is specifically configured to:
determine, according to a load value of a processor, the multiple processors that are configured to perform the multiplication operation; and invoke the determined multiple processors to perform the multiplication operation on the first elements and the second elements.

Z meets the following formula:

$$Z = floor((L\log 2)/2)$$

where Z is a maximum length of an element obtained by dividing an entered character string, and L is the size of the memory unit of the execution engine.

Optionally, the first elements and the second elements meet a decimal notation format.

Optionally, the execution engine is a RenderScript execution engine.

It can be seen from the foregoing content that, the terminal according to this embodiment of the present invention divides a first character string into M first elements, where lengths of the first elements are not greater than Z; divides a second character string into N second elements, where lengths of the second elements are not greater than Z, Z is determined by the terminal according to a size of a memory unit of an execution engine, M is a positive integer, and N is a positive integer; invokes multiple processors to perform a multiplication operation on the first elements and the second elements to obtain an N x M matrix, where the terminal invokes the multiple processors by using the execution engine, and each processor performs a different multiplication operation; performs, by invoking the multiple processors, an addition operation on elements on a preset diagonal of the N x M matrix to obtain a first temporary result array; and outputs an operation result according to the first temporary result array. In this technical solution, a terminal can divide an entered first character string and second character string, and invoke multiple processors by using an execution engine, so that a parallel operation can be implemented during operation. Therefore, a computing speed of a large integer multiplication operation is improved; furthermore, because the execution engine can run in the Android operating system, a current problem of a relatively slow execution speed of a large integer multiplication operation in the Android operating system is resolved.

As shown in FIG 8, a parallel computing terminal according to an embodiment of the present invention includes:

a processor 81, a memory 82, an input/output interface 83, a communications interface 84, and a bus 85, where the processor 81, the memory 82, the input/output interface 83, and the communications interface 84 implement a communications connection with each other by using the bus 85.

The processor 81 may be a general central processing unit (Central Processing Unit, CPU), a microprocessor, an application-specific integrated circuit (Application Specific Integrated Circuit, ASIC), or one or more integrated circuits that are configured to execute a related program, so as to implement the technical solution provided in this embodiment of the present invention, where an execution engine is a dedicated processor.

The memory 82 may be a read-only memory (Read Only Memory, ROM), a static storage device, a dynamic storage device, or a random access memory (Random Access Memory, RAM). The memory 82 may store an operating system and another application program. When the technical solution provided in this embodiment of the present invention is implemented by using software or firmware, program code used to implement the technical solution provided in this embodiment of the present invention is stored in the memory 82, and is executed by the processor 81.

The processor 81 is specifically configured to:

divide a first character string into M first elements, where lengths of the first elements are not greater than Z; and divide a second character string into N second elements, where lengths of the second elements are not greater than Z, Z is determined according to a size of a memory unit of the execution engine, M is a positive integer, and N is a positive integer;

invoke multiple processors to perform a multiplication operation on the first elements and the second elements to obtain an N x M matrix, where the multiple processors are invoked by using the execution engine, and each processor performs a different multiplication operation;

perform, by invoking the multiple processors, an addition operation on elements on a preset diagonal of the N x M matrix to obtain a first temporary result array; and

output an operation result according to the first temporary result array.

The outputting an operation result according to the first temporary result array specifically includes:

converting the first temporary result array into a second temporary result array, where the second temporary result array includes multiple second temporary results, and lengths of the second temporary results are not greater than Z;

for any second temporary result, determining whether a length of the second temporary result is equal to Z;

if the length of the second temporary result is less than Z, adding a 0 to the left side of the second temporary result, so as to obtain an operation result by converting the second temporary result into a character string format after the length of the second temporary result reaches Z; or

if the length of the second temporary result is equal to Z, converting the second temporary result into a character string format to obtain an operation result; and

outputting the operation result in a sequence of offsets of the second temporary results in the second array.

Optionally, the first temporary result array includes multiple first temporary results; and

the converting the first temporary result array into a second temporary result array specifically includes: determining whether a length of a first temporary result is greater than Z;

if the length of the first temporary result is not greater than Z, setting the first temporary result to a second temporary result; or

if the length of the first temporary result is greater than Z, setting a first section of the first temporary result to a second temporary result, and dividing a second section of the first temporary result by $10^Z$ to obtain a carry result; and

determining a corresponding first temporary result after an offset of the first temporary result in the first temporary array is increased by 1; adding the carry result and the determined first temporary result; and re-determining whether a length of a first temporary result is greater than Z, where

the first section is a section whose length is Z in the first temporary result, and the second section is a section whose length is greater than Z in the first temporary result.

Optionally, the invoking multiple processors to perform a multiplication operation on the first elements and the second elements specifically includes:

determining, according to a load value of a processor, the multiple processors that are configured to perform the multiplication operation; and invoking the determined multiple processors to perform the multiplication operation on the first elements and the second elements.

Z meets the following formula:

$$Z = floor((L \log 2) / 2)$$

where Z is a maximum length of an element obtained by dividing an entered character string, and L is the size of the memory unit of the execution engine.

Optionally, the first elements and the second elements meet a decimal notation format.

The input/output interface 83 is configured to receive entered data and information, and output data such as an operation result.

The bus 85 may include a channel in which information is transmitted between components (such as the processor 81, the memory 82, the input/output interface 83, and the communications interface 84) in the terminal 80.

It should be noted that although for the terminal 80, only the processor 81, the memory 82, the input/output interface 83, the communications interface 84, and the bus 85 are shown in FIG 8, in a specific implementation process, a person skilled in the art should understand that the terminal 80 further includes another component required for implementing normal operation. Furthermore, a person skilled in the art should understand that, according to a specific requirement, the terminal 80 may further include a hardware component that implements another additional function. In addition, a person skilled in the art should understand that the terminal 80 may also include only a component or a module that is required for implementing this embodiment of the present invention, and it is unnecessary for the terminal 80 to include all devices shown in FIG 8.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the scope of the present invention. The present invention is intended to cover these modifications and variations provided that they fall within the scope of protection defined by the following claims.

**Claims**

1. A parallel computing method, wherein the method comprises:

dividing (100, 602, 606), by a terminal, a first character string into M first elements, wherein lengths of the first elements are not greater than Z; and dividing a second character string into N second elements, wherein lengths of the second elements are not greater than Z, Z is determined by the terminal according to a size of a memory unit of an execution engine, M is a positive integer, and N is a positive integer and Z meets the following formula:

$$Z = floor((L \log 2)/2)$$

wherein Z is a maximum length of an element obtained by dividing an entered character string, and L is the size of the memory unit of the execution engine;
invoking (101, 608, 609, 610, 611), by the terminal, multiple processors to perform a multiplication operation on the first elements and the second elements to obtain an N x M matrix, wherein the terminal invokes the multiple processors by using the execution engine, and each processor performs a different multiplication operation;
performing (102, 612), by the terminal by invoking the multiple processors, an addition operation on elements on preset diagonals of the N x M matrix to obtain a first temporary result array; and
outputting (103, 613, 614, 615, 616, 617), by the terminal, an operation result according to the first temporary result array;
wherein the outputting (103, 613, 614, 615, 616, 617), by the terminal, an operation result according to the first temporary result array specifically comprises:

converting (613), by the terminal, the first temporary result array into a second temporary result array, wherein the second temporary result array comprises multiple second temporary results, and lengths of the second temporary results are not greater than Z;

for any second temporary result, determining (614), by the terminal, whether a length of the second temporary result is equal to Z;
adding (616), by the terminal, a 0 to the left side of the second temporary result when the length of the second temporary result is less than Z, so as to obtain an operation result by converting the second temporary result into a character string format after the length of the second temporary result reaches Z; or
converting (615), by the terminal, the second temporary result into a character string format to obtain an operation result when the length of the second temporary result is equal to Z; and
outputting (617), by the terminal, the operation result in a sequence of offsets of the second temporary results in the second temporary result array.

2. The method according to claim 1, wherein the first temporary result array comprises multiple first temporary results; and
the converting, by the terminal, the first temporary result array into a second temporary result array specifically comprises:

determining, by the terminal, whether a length of a first temporary result is greater than Z;
setting, by the terminal, the first temporary result to a second temporary result when the length of the first temporary result is not greater than Z; or
setting, by the terminal, a first section of the first temporary result to a second temporary result, and dividing a second section of the first temporary result by $10^Z$ to obtain a carry result if the length of the first temporary result is greater than Z; and
determining, by the terminal, a corresponding first temporary result after an offset of the first temporary result in the first temporary result array is increased by 1; adding the carry result and the determined first temporary result; and re-determining whether a length of a first temporary result is greater than Z, wherein
the first section is a section whose length is Z in the first temporary result, and the second section is a section whose length is greater than Z in the first temporary result.

3. The method according to claim 1 or 2, wherein the invoking (101, 608, 609, 610, 611), by the terminal, multiple processors to perform a multiplication operation on the first elements and the second elements specifically comprises:

determining (609), by the terminal according to a load value of a processor, the multiple processors that are configured to perform the multiplication operation; and

invoking (611), by the terminal, the determined multiple processors to perform the multiplication operation on the first elements and the second elements.

4. The method according to any one of claims 1 to 3, wherein the first elements and the second elements meet a decimal notation format.

5. The method according to any one of claims 1 to 4, wherein the execution engine is a RenderScript execution engine.

6. A terminal, wherein the terminal comprises:

an element dividing module (700), configured to divide a first character string into M first elements, wherein lengths of the first elements are not greater than Z; and divide a second character string into N second elements, wherein lengths of the second elements are not greater than Z, Z is determined according to a size of a memory unit of an execution engine, M is a positive integer, and N is a positive integer; and Z meets the following formula:

$$Z = floor((L \log 2)/2)$$

wherein Z is a maximum length of an element obtained by dividing an entered character string, and L is the size of the memory unit of by the execution engine
a multiplication operation module (701), configured to invoke multiple processors to perform a multiplication operation on the first elements and the second elements to obtain an N x M matrix, wherein the multiplication operation module (701) invokes the multiple processors by using the execution engine, and each processor performs a different multiplication operation;
an addition operation module (702), configured to perform, by invoking the multiple processors, an addition operation on elements on preset diagonals of the N x M matrix to obtain a first temporary result array; and
a result outputting module (703), configured to output an operation result according to the first temporary result array;
wherein the result outputting module (703) is specifically configured to:
convert the first temporary result array into a second temporary result array, wherein the second temporary result array comprises multiple second temporary results, and lengths of the second temporary results are not greater than Z; for any second temporary result, determine whether a length of the second temporary result is equal to Z; add a 0 to the left side of the second temporary result when the length of the second temporary result is less than Z, so as to obtain an operation result by converting the second temporary result into a character string format after the length of the second temporary result reaches Z; or convert the second temporary result into a character string format to obtain an operation result when the length of the second temporary result is equal to Z; and output the operation result in a sequence of offsets of the second temporary results in the second temporary result array.

7. The terminal according to claim 6, wherein the first temporary result array comprises multiple first temporary results, and the result outputting module (703) is specifically configured to:
determine whether a length of a first temporary result is greater than Z; set the first temporary result to a second temporary result when the length of the first temporary result is not greater than Z,; or set a first section of the first temporary result to a second temporary result, and divide a second section of the first temporary result by $10^Z$ to obtain a carry result when the length of the first temporary result is greater than Z; and determine a corresponding first temporary result after an offset of the first temporary result in the first temporary result array is increased by 1, add the carry result and the determined first temporary result, and re-determine whether a length of a first temporary result is greater than Z, wherein the first section is a section whose length is Z in the first temporary result, and the second section is a section whose length is greater than Z in the first temporary result.

8. The terminal according to claim 6 or 7, wherein the multiplication operation module (701) is specifically configured to:
determine, according to a load value of a processor, the multiple processors that are configured to perform the multiplication operation; and invoke the determined multiple processors to perform the multiplication operation on the first elements and the second elements.

9. The terminal according to any one of claims 6 to 8, wherein the first elements and the second elements meet a decimal notation format.

10. The terminal according to any one of claims 6 to 9, wherein the execution engine is a RenderScript execution engine.

**Patentansprüche**

1. Paralleles Berechnungsverfahren, wobei das Verfahren umfasst:

   Teilen (100, 602, 606), durch ein Endgerät, einer ersten Zeichenkette in M erste Elemente, wobei die Längen der ersten Elemente nicht größer als Z sind; und Teilen einer zweiten Zeichenkette in N zweite Elemente, wobei die Längen der zweiten Elemente nicht größer als Z sind, wobei Z durch das Endgerät gemäß einer Größe einer Speichereinheit einer Ausführungs-"Engine" ermittelt wird, wobei M eine positive ganze Zahl ist, und wobei N eine positive ganze Zahl ist, und wobei Z die folgende Formel erfüllt:

   $$Z = floor((L \log 2)/2)$$

   wobei Z eine maximale Länge eines Elements ist, das durch ein Teilen einer eingegebenen Zeichenkette erhalten wird, und L die Größe der Speichereinheit der Ausführungs-"Engine" ist;
   Aufrufen (101, 608, 609, 610, 611), durch das Endgerät, mehrerer Prozessoren zum Durchführen einer Multiplikationsoperation an den ersten Elementen und an den zweiten Elementen, um eine N x M Matrix zu erhalten, wobei das Endgerät die mehreren Prozessoren aufruft, indem die Ausführungs-"Engine" verwendet wird, und jeder Prozessor eine andere Multiplikationsoperation durchführt;
   Durchführen (102, 612), durch das Endgerät, indem es mehrere Prozessoren aufruft, einer Additionsoperation an Elementen auf voreingestellten Diagonalen der N x M Matrix, um eine erste provisorische Ergebnisanordnung zu erhalten; und
   Ausgeben (103, 613, 614, 615, 616, 617), durch das Endgerät, eines Operationsergebnisses gemäß der ersten provisorischen Ergebnisanordnung;
   wobei das Ausgeben (103, 613, 614, 615, 616, 617), durch das Endgerät, eines Operationsergebnisses gemäß der ersten provisorischen Ergebnisanordnung insbesondere umfasst:

   Umwandeln (613), durch das Endgerät, der ersten provisorischen Ergebnisanordnung in eine zweite provisorische Ergebnisanordnung, wobei die zweite provisorische Ergebnisanordnung mehrere zweite provisorische Ergebnisse umfasst, und wobei die Längen der zweiten provisorischen Ergebnisse nicht größer als Z sind;
   für jedes zweite provisorische Ergebnis, Ermitteln (614), durch das Endgerät, ob eine Länge des zweiten provisorischen Ergebnisses gleich Z ist;
   Hinzufügen (616), durch das Endgerät, einer 0 auf der linken Seite des zweiten provisorischen Ergebnisses, wenn die Länge des zweiten provisorischen Ergebnisses kleiner als Z ist, um ein Operationsergebnis zu erhalten, indem das zweite provisorische Ergebnis in ein Zeichenkettenformat umgewandelt wird, nachdem die Länge des zweiten provisorischen Ergebnisses Z erreicht; oder
   Umwandeln (615), durch das Endgerät, des zweiten provisorischen Ergebnisses in ein Zeichenkettenformat, um ein Operationsergebnis zu erhalten, wenn die Länge des zweiten provisorischen Ergebnisses gleich Z ist; und
   Ausgeben (617), durch das Endgerät, des Operationsergebnisses in einer Sequenz von Offsets der zweiten provisorischen Ergebnisse in der zweiten provisorischen Ergebnisanordnung.

2. Verfahren nach Anspruch 1, wobei die erste provisorische Ergebnisanordnung mehrere erste provisorische Ergebnisse umfasst; und wobei das Umwandeln, durch das Endgerät, der ersten provisorischen Ergebnisanordnung in eine zweite provisorische Ergebnisanordnung insbesondere umfasst:

   Ermitteln, durch das Endgerät, ob eine Länge eines ersten provisorischen Ergebnisses größer als Z ist;
   Einstellen, durch das Endgerät, des ersten provisorischen Ergebnisses auf ein zweites provisorisches Ergebnis, wenn die Länge des ersten provisorischen Ergebnisses nicht größer als Z ist; oder
   Einstellen, durch das Endgerät, eines ersten Abschnitts des ersten provisorischen Ergebnisses auf ein zweites provisorisches Ergebnis, und Teilen eines zweiten Abschnitts des ersten provisorischen Ergebnisses durch $10^z$, um ein Transportergebnis zu erhalten, wenn die Länge des ersten provisorischen Ergebnisses größer als Z ist; und
   Ermitteln, durch das Endgerät, eines entsprechenden ersten provisorischen Ergebnisses, nachdem ein Offset des ersten provisorischen Ergebnisses in der ersten provisorischen Ergebnisanordnung um 1 erhöht wurde; Hinzufügen des Transportergebnisses und des ermittelten ersten provisorischen Ergebnisses; und erneutes Ermitteln, ob eine Länge eines ersten provisorischen Ergebnisses größer als Z ist, wobei:

der erste Abschnitt ein Abschnitt ist, dessen Länge in dem ersten provisorischen Ergebnis gleich Z ist, und der zweite Abschnitt ein Abschnitt ist, dessen Länge in dem ersten provisorischen Ergebnis größer als Z ist.

3. Verfahren nach Anspruch 1 oder 2, wobei das Aufrufen (101, 608, 609, 610, 611), durch das Endgerät, mehrerer Prozessoren zum Durchführen einer Multiplikationsoperation an den ersten Elementen und an den zweiten Elementen insbesondere umfasst:

Ermitteln (609), durch das Endgerät gemäß einem Auslastungswert eines Prozessors, der mehreren Prozessoren, die zum Durchführen der Multiplikationsoperation konfiguriert sind; und

Aufrufen (611), durch das Endgerät, der ermittelten mehreren Prozessoren, um die Multiplikationsoperation an den ersten Elementen und an den zweiten Elementen durchzuführen.

4. Verfahren nach einem der Ansprüche 1 bis 3, wobei die ersten Elemente und die zweiten Elemente ein Dezimaldarstellungsformat erfüllen.

5. Verfahren nach einem der Ansprüche 1 bis 4, wobei die Ausführungs-"Engine" eine "RenderScript"-Ausführungs-"Engine" ist.

6. Endgerät, wobei das Endgerät umfasst:

ein Elementteilungsmodul (700), das konfiguriert ist zum Teilen einer ersten Zeichenkette in M erste Elemente, wobei die Längen der ersten Elemente nicht größer als Z sind; und Teilen einer zweiten Zeichenkette in N zweite Elemente, wobei die Längen der zweiten Elemente nicht größer als Z sind, wobei Z gemäß einer Größe einer Speichereinheit einer Ausführungs-"Engine" ermittelt wird, wobei M eine positive ganze Zahl ist, und wobei N eine positive ganze Zahl ist; und wobei Z die folgende Formel erfüllt:

$$Z = floor((L\log 2)/2)$$

wobei Z eine maximale Länge eines Elements ist, das durch ein Teilen einer eingegebenen Zeichenkette erhalten wird, und L die Größe der Speichereinheit der Ausführungs-"Engine" ist; ein Multiplikationsoperationsmodul (701), das konfiguriert ist zum Aufrufen mehrerer Prozessoren zum Durchführen einer Multiplikationsoperation an den ersten Elementen und an den zweiten Elementen, um eine N x M Matrix zu erhalten, wobei das Multiplikationsoperationsmodul (701) die mehreren Prozessoren aufruft, indem die Ausführungs-"Engine" verwendet wird, und wobei jeder Prozessor eine andere Multiplikationsoperation durchführt; ein Additionsoperationsmodul (702), das konfiguriert ist zum Durchführen, indem es mehrere Prozessoren aufruft, einer Additionsoperation an Elementen auf voreingestellten Diagonalen der N x M Matrix, um eine erste provisorische Ergebnisanordnung zu erhalten; und ein Ergebnisausgabemodul (703), das konfiguriert ist zum Ausgeben eines Operationsergebnisses gemäß der ersten provisorischen Ergebnisanordnung; wobei das Ergebnisausgabemodul (703) insbesondere konfiguriert ist zum: Umwandeln der ersten provisorischen Ergebnisanordnung in eine zweite provisorische Ergebnisanordnung, wobei die zweite provisorische Ergebnisanordnung mehrere zweite provisorische Ergebnisse umfasst, und wobei die Längen der zweiten provisorischen Ergebnisse nicht größer als Z sind; für jedes zweite provisorische Ergebnis, Ermitteln, ob eine Länge des zweiten provisorischen Ergebnisses gleich Z ist; Hinzufügen einer 0 auf der linken Seite des zweiten provisorischen Ergebnisses, wenn die Länge des zweiten provisorischen Ergebnisses kleiner als Z ist, um ein Operationsergebnis zu erhalten, indem das zweite provisorische Ergebnis in ein Zeichenkettenformat umgewandelt wird, nachdem die Länge des zweiten provisorischen Ergebnisses Z erreicht; oder Umwandeln des zweiten provisorischen Ergebnisses in ein Zeichenkettenformat, um ein Operationsergebnis zu erhalten, wenn die Länge des zweiten provisorischen Ergebnisses gleich Z ist; und Ausgeben des Operationsergebnisses in einer Sequenz von Offsets der zweiten provisorischen Ergebnisse in der zweiten provisorischen Ergebnisanordnung.

7. Endgerät nach Anspruch 6, wobei die erste provisorische Ergebnisanordnung mehrere erste provisorische Ergebnisse umfasst, und wobei das Ergebnisausgabemodul (703) insbesondere konfiguriert ist zum: Ermitteln, ob eine Länge eines ersten provisorischen Ergebnisses größer als Z ist; Einstellen des ersten provisorischen Ergebnisses auf ein zweites provisorisches Ergebnis, wenn die Länge des ersten provisorischen Ergebnisses nicht größer als Z ist; oder Einstellen eines ersten Abschnitts des ersten provisorischen Ergebnisses auf ein zweites provisorisches Ergebnis, und Teilen eines zweiten Abschnitts des ersten provisorischen Ergebnisses durch $10^Z$, um ein Transportergebnis zu erhalten, wenn die Länge des ersten provisorischen Ergebnisses größer als Z ist; und Ermitteln eines entsprechenden ersten provisorischen Ergebnisses, nachdem ein Offset des ersten provisorischen Ergebnisses in der ersten provisorischen Ergebnisanordnung um 1 erhöht wurde; Hinzufügen des Transportergebnisses und des ermittelten ersten provisorischen Ergebnisses, und erneuten Ermitteln, ob eine Länge eines ersten provisorischen Ergebnisses größer als Z ist, wobei der erste Abschnitt ein Abschnitt ist, dessen Länge in dem ersten provisorischen Ergebnis gleich Z ist, und wobei der zweite Abschnitt ein Abschnitt ist, dessen Länge in dem ersten provisorischen Ergebnis größer als Z ist.

8. Endgerät nach Anspruch 6 oder 7, wobei das Multiplikationsoperationsmodul (701) insbesondere konfiguriert ist zum:
Ermitteln, gemäß einem Auslastungswert eines Prozessors, der mehreren Prozessoren, die zum Durchführen der Multiplikationsoperation konfiguriert sind; und Aufrufen der ermittelten mehreren Prozessoren, um die Multiplikationsoperation an den ersten Elementen und an den zweiten Elementen durchzuführen.

9. Endgerät nach einem der Ansprüche 6 bis 8, wobei die ersten Elemente und die zweiten Elemente ein Dezimaldarstellungsformat erfüllen.

10. Endgerät nach einem der Ansprüche 6 bis 9, wobei die Ausführungs-"Engine" eine "RenderScript"-Ausführungs-"Engine" ist.

**Revendications**

1. Procédé de calcul parallèle, le procédé comprenant :

la division (100, 602, 606), par un terminal, d'une première chaîne de caractères en M premiers éléments, des longueurs des premiers éléments n'étant pas supérieures à Z ;
et la division d'une seconde chaîne de caractères en N seconds éléments, des longueurs des seconds éléments n'étant pas supérieures à Z, Z étant déterminé par le terminal en fonction d'une taille d'une unité de mémoire d'un moteur d'exécution, M étant un entier positif, et N étant un entier positif et Z répondant à la formule suivante :

$$Z = floor((L\log2)/2)$$

dans lequel Z est une longueur maximale d'un élément obtenu en divisant une chaîne de caractères entrée, et L est la taille de l'unité de mémoire du moteur d'exécution ; l'appel (101, 608, 609, 610, 611), par le terminal, de multiples processeurs pour réaliser une opération de multiplication sur les premiers éléments et les seconds éléments afin d'obtenir une matrice N x M, dans lequel le terminal appelle les multiples processeurs à l'aide du moteur d'exécution, et chaque processeur réalise une opération de multiplication différente ;
la réalisation (102, 612), par le terminal en appelant les multiples processeurs, d'une opération d'addition sur des éléments sur des diagonales prédéfinies de la matrice N x M afin d'obtenir une première table de résultats temporaires ; et
la délivrance (103, 613, 614, 615, 616, 617), par le terminal, d'un résultat d'opération conformément à la première table de résultats temporaires ;
dans lequel la délivrance (103, 613, 614, 615, 616, 617), par le terminal, d'un résultat d'opération conformément à la première table de résultats temporaires comprend spécifiquement :

la conversion (613), par le terminal, de la première table de résultats temporaires en une seconde table de résultats temporaires, la seconde table de résultats temporaires comprenant plusieurs seconds résultats temporaires et des longueurs des seconds résultats temporaires n'étant pas supérieures à Z ;
pour tout second résultat temporaire, la détermination (614), par le terminal, si une longueur du second résultat temporaire est égale ou non à Z ;
l'ajout (616), par le terminal, d'un 0 au côté gauche du second résultat temporaire quand la longueur du second résultat temporaire est inférieure à Z, de manière à obtenir un résultat d'opération en convertissant le second résultat temporaire en un format de chaîne de caractères après que la longueur du second résultat temporaire atteint Z ; ou la conversion (615), par le terminal, du second résultat temporaire en un format de chaîne de caractères pour obtenir un résultat d'opération lorsque la longueur du second résultat temporaire est égale à Z ; et
la délivrance (617), par le terminal, du résultat d'opération dans une séquence de décalages des seconds résultats temporaires dans la seconde table de résultats temporaires.

2. Procédé selon la revendication 1, dans lequel la première table de résultats temporaires comprend plusieurs premiers résultats temporaires ; et
la conversion, par le terminal, de la première table de résultats temporaires en une seconde table de résultats temporaires comprend spécifiquement :

la détermination, par le terminal, si une longueur d'un premier résultat temporaire est ou non supérieure à Z ;

l'établissement, par le terminal, du premier résultat temporaire sur un second résultat temporaire quand la longueur du premier résultat temporaire n'est pas supérieure à Z ; ou

l'établissement, par le terminal, d'une première section du premier résultat temporaire sur un second résultat temporaire, et la division d'une seconde section du premier résultat temporaire par $10^Z$ pour obtenir un résultat de report si la longueur du premier résultat temporaire est supérieure à Z ; et

la détermination, par le terminal, d'un premier résultat temporaire correspondant après qu'un décalage du premier résultat temporaire dans la première table de résultats temporaires est augmenté de 1 ; l'addition du résultat de report et du premier résultat temporaire déterminé ; et la redétermination si une longueur d'un premier résultat temporaire est supérieure ou non à Z, dans lequel

la première section est une section dont la longueur est Z dans le premier résultat temporaire, et la seconde section est une section dont la longueur est supérieure à Z dans le premier résultat temporaire.

3. Procédé selon la revendication 1 ou 2, dans lequel l'appel (101, 608, 609, 610, 611), par le terminal, de multiples processeurs pour réaliser une opération de multiplication sur les premiers éléments et les seconds éléments comprend spécifiquement :

la détermination (609), par le terminal en fonction d'une valeur de charge d'un processeur, des multiples processeurs configurés pour réaliser l'opération de multiplication ; et

l'appel (611), par le terminal, des multiples processeurs déterminés pour réaliser l'opération de multiplication sur les premiers éléments et les seconds éléments.

4. Procédé selon l'une quelconque des revendications 1 à 3, dans lequel les premiers éléments et les seconds éléments satisfont un format de notation décimale.

5. Procédé selon l'une quelconque des revendications 1 à 4, dans lequel le moteur d'exécution est un moteur d'exécution RenderScript.

6. Terminal, le terminal comprenant :

un module de division d'éléments (700), configuré pour diviser une première chaîne de caractères en M premiers éléments, des longueurs des premiers éléments n'étant pas supérieures à Z ; et diviser une seconde chaîne de caractères en N seconds éléments, des longueurs des seconds éléments n'étant pas supérieures à Z, Z étant déterminé en fonction de la taille d'une unité de mémoire d'un moteur d'exécution, M étant un entier positif et N étant un entier positif ; et Z répondant à la formule suivante :

$$Z = floor((L\log 2)/2)$$

dans lequel Z est une longueur maximale d'un élément obtenu en divisant une chaîne de caractères entrée, et L est la taille de l'unité de mémoire du moteur d'exécution ; un module d'opération de multiplication (701), configuré pour appeler de multiples processeurs afin de réaliser une opération de multiplication sur les premiers éléments et les seconds éléments pour obtenir une matrice N x M, le module d'opération de multiplication (701) appelant les multiples processeurs à l'aide du moteur d'exécution, et chaque processeur réalisant une opération de multiplication différente ;

un module d'opération d'addition (702), configuré pour réaliser, en appelant les multiples processeurs, une opération d'addition sur des éléments sur des diagonales prédéfinies de la matrice N x M pour obtenir une première table de résultats temporaires ; et

un module de délivrance de résultats (703), configuré pour délivrer un résultat d'opération conformément à la première table de résultats temporaires ;

dans lequel le module de délivrance de résultats (703) est spécifiquement configuré pour : convertir la première table de résultats temporaires en une seconde table de résultats temporaires, la seconde table de résultats temporaires comprenant de multiples seconds résultats temporaires et des longueurs des seconds résultats temporaires n'étant pas supérieures à Z ; pour tout second résultat temporaire, déterminer si une longueur du second résultat temporaire est égale ou non à Z ; ajouter un 0 au côté gauche du second résultat temporaire quand la longueur du second résultat temporaire est inférieure à Z, de manière à obtenir un résultat d'opération en convertissant le second résultat temporaire en un format de chaîne de caractères après que la longueur du second résultat temporaire atteint Z ; ou convertir le second résultat temporaire en un format de chaîne de caractères pour obtenir un résultat d'opération quand la longueur du second résultat temporaire est égale à Z, et délivrer le résultat d'opération dans une séquence de décalages des seconds résultats temporaires dans la seconde table de résultats temporaires.

7. Terminal selon la revendication 6, dans lequel la première table de résultats temporaires comprend de multiples premiers résultats temporaires, et le module de délivrance de résultats (703) est spécifiquement configuré pour :
déterminer si une longueur d'un premier résultat temporaire est ou non supérieure à Z ; établir le premier résultat temporaire sur un second résultat temporaire quand la longueur du premier résultat temporaire n'est pas supérieure à Z ; ou établir une première section du premier résultat temporaire sur un second résultat temporaire, et diviser une seconde section du premier résultat temporaire par $10^Z$ pour obtenir un résultat de report lorsque la longueur du premier résultat temporaire est supérieure à Z ; et déterminer un premier résultat temporaire correspondant après qu'un décalage du premier résultat temporaire dans la première table de résultats temporaires est augmenté de 1, additionner le résultat de report et le premier résultat temporaire déterminé, et redéterminer si une longueur d'un premier résultat temporaire est ou non supérieure à Z, dans lequel la première section est une section dont la longueur est Z dans le premier résultat temporaire, et la seconde section est une section dont la longueur est supérieure à Z dans le premier résultat temporaire.

8. Terminal selon la revendication 6 ou 7, dans lequel le module d'opération de multiplication (701) est spécifiquement configuré pour :
déterminer, conformément à une valeur de charge d'un processeur, les multiples processeurs qui sont configurés pour réaliser l'opération de multiplication ; et appeler les multiples processeurs déterminés pour réaliser l'opération de multiplication sur les premiers éléments et les seconds éléments.

9. Terminal selon l'une quelconque des revendications 6 à 8, dans lequel les premiers éléments et les seconds éléments satisfont un format de notation décimale.

10. Terminal selon l'une quelconque des revendications 6 à 9, dans lequel le moteur d'exécution est un moteur d'exécution RenderScript.

A terminal divides a first character string into M first elements, where lengths of the first elements are not greater than Z; and divides a second character string into N second elements, where lengths of the second elements are not greater than Z, Z is determined by the terminal according to a size of memory occupied by an execution engine, M is a positive integer, and N is a positive integer

100

The terminal invokes multiple processors to perform a multiplication operation on the first elements and the second elements to obtain an N x M matrix, where the terminal invokes the multiple processors by using the execution engine, and each processor performs a different multiplication operation

101

The terminal performs, by invoking the multiple processors, an addition operation on elements on a preset diagonal of the N x M matrix to obtain a first temporary result array

102

The terminal outputs an operation result according to the first temporary result array

103

FIG. 1

Enter a first character string

Enter a second character string

FIG. 2a

| Enter a first character string |
|---|

After entry succeeds →

| Enter a second character string |
|---|

FIG. 2b

First array

| a[0] |
|---|
| a[1] |
| a[2] |
| a[3] |
| a[4] |
| a[5] |

Second array

| b[0] |
|---|
| b[1] |
| b[2] |
| b[3] |
| b[4] |
| b[5] |

FIG. 3

|       | a[5]        | a[4]        | a[3]        | a[2]        | a[1]        | a[0]        |
|-------|-------------|-------------|-------------|-------------|-------------|-------------|
| b[5]  | a[5]×b[5]   | a[4]×b[5]   | a[3]×b[5]   | a[2]×b[5]   | a[1]×b[5]   | a[0]×b[5]   |
| b[4]  | a[5]×b[4]   | a[4]×b[4]   | a[3]×b[4]   | a[2]×b[4]   | a[1]×b[4]   | a[0]×b[4]   |
| B[3]  | a[5]×b[3]   | a[4]×b[3]   | a[3]×b[3]   | a[2]×b[3]   | a[1]×b[3]   | a[0]×b[3]   |
| b[2]  | a[5]×b[2]   | a[4]×b[2]   | a[3]×b[2]   | a[2]×b[2]   | a[1]×b[2]   | a[0]×b[2]   |
| b[1]  | a[5]×b[1]   | a[4]×b[1]   | a[3]×b[1]   | a[2]×b[1]   | a[1]×b[1]   | a[0]×b[1]   |
| b[0]  | a[5]×b[0]   | a[4]×b[0]   | a[3]×b[0]   | a[2]×b[0]   | a[1]×b[0]   | a[0]×b[0]   |

FIG. 4

| c[10] | c[9] | c[8] | c[7] | c[6] | c[5] | c[4] | c[3] | c[2] | c[1] | c[0] |
|-------|------|------|------|------|------|------|------|------|------|------|

FIG. 5

```
                          ┌─────────────┐
                          │    Start    │
                          └──────┬──────┘
                                 │                    ╭─ 600
         Yes       ╱─────────────▼─────────────╲
        ◄─────────╱         A terminal           ╲
                  ╲ determines whether an entered first character string ╱
                   ╲          is a number         ╱
                    ╲─────────────┬──────────────╱
                                  │ No                ╭─ 601
        ┌─────────────────────────▼─────────────────────────┐
        │  The terminal displays an input error and a prompt for entering a new  │
        │      character string, and the procedure is complete   │
        └───────────────────────────────────────────────────┘
        ┌───────────────────────────────────────────────────┐  ╭─ 602
        │ The terminal divides the first character string into M first elements, where │
        │ lengths of the first elements are not greater than Z, M is a positive integer, │
        │    and Z is determined according to a size of memory occupied by an │
        │                   execution engine                 │
        └─────────────────────────┬─────────────────────────┘
                                  │                    ╭─ 603
        ┌─────────────────────────▼─────────────────────────┐
        │ The terminal stores the M first elements into a first array in sequence and in │
        │              a decimal notation format             │
        └─────────────────────────┬─────────────────────────┘
                                  │                    ╭─ 604
         Yes       ╱─────────────▼─────────────╲
        ◄─────────╱        The terminal          ╲
                  ╲ determines whether an entered second character string ╱
                   ╲          is a number         ╱
                    ╲─────────────┬──────────────╱
                                  │ No                ╭─ 605
        ┌─────────────────────────▼─────────────────────────┐
        │  The terminal displays an input error and a prompt for entering a new  │
        │      character string, and the procedure is complete   │
        └───────────────────────────────────────────────────┘
        ┌───────────────────────────────────────────────────┐  ╭─ 606
        │  The terminal divides the second character string into N second elements, │
        │ where lengths of the second elements are not greater than Z, N is a positive │
        │ integer, and Z is determined according to the size of the memory occupied │
        │                 by the execution engine            │
        └─────────────────────────┬─────────────────────────┘
                                  │                    ╭─ 607
        ┌─────────────────────────▼─────────────────────────┐
        │ The terminal stores the N second elements into a second array in sequence │
        │              and in a decimal notation format      │
        └─────────────────────────┬─────────────────────────┘
                                  │                    ╭─ 608
        ┌─────────────────────────▼─────────────────────────┐
        │         The terminal starts the execution engine   │
        └───────────────────────────────────────────────────┘
```

TO

FIG. 6 (continued)

FIG. 6

CONT. FROM
FIG. 6

The terminal determines, according to a load value of a processor in the terminal, processors that can perform a computing task — 609

The terminal separately stores the elements stored in the first array and the elements stored in the second array into the memory occupied by the execution engine — 610

The terminal invokes, by using the execution engine, the determined multiple processors to perform a multiplication operation on the elements in the memory to obtain an N x M matrix, and stores the N x M matrix into the memory — 611

The terminal performs, by invoking the multiple processors, an addition operation on elements on a preset diagonal of the N x M matrix to obtain a first temporary result array — 612

The terminal converts the first temporary result array into a second temporary result array, where the second temporary result array includes multiple second temporary results, and lengths of the second temporary results are not greater than Z — 613

No

The terminal determines whether a length of each second temporary result is equal to Z bits — 614

Yes

The terminal converts the second temporary result into a character string format to obtain an operation result — 615

The terminal adds a 0 to the left side of the second temporary result, so as to obtain an operation result by converting the second temporary result into a character string format after the length of the second temporary result reaches Z — 616

The terminal outputs the operation result in a sequence of offsets of the second temporary results in the second array, and the procedure is complete — 617

FIG. 6 (continued)

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1614027 A2

- CN 101271570 A

**Non-patent literature cited in the description**

- **GUY E BLELLOCH.** Divide-and-Conquer and Recurrences. *Parallel and Sequential Data Structures and Alogrithms,* 19 January 2012